# EUROPÄISCHE PATENTANMELDUNG

(11) **EP 4 480 630 A2**
(43) Veröffentlichungstag der Anmeldung: **25.12.2024**
(21) Anmeldenummer: 24182666.8
(22) Anmeldetag: 17.06.2024
(51) Int. Cl.: B23Q 1/00, B25B 5/06

(54) **SPANNVORRICHTUNG**

(30) Priorität: 22.06.2023 DE 102023116419
(71) Anmelder: Andreas Maier GmbH & Co. KG, 70734 Fellbach (DE)
(72) Erfinder: Dietterle, Martin, 73575 Leinzell (DE)
(74) Vertreter: Hoeger, Stellrecht & Partner Patentanwälte mbB

(57) **Zusammenfassung**

Um eine Spannvorrichtung zum Einspannen eines an einem Werkstück oder an einem Werkstückträger angeordneten Spannbolzens, wobei die Spannvorrichtung Verriegelungselemente und einen Kolben zum Bewegen der Verriegelungselemente aus einer Freigabestellung in eine Verriegelungsstellung umfasst, zu schaffen, welche unabhängig vom Vorhandensein einer Zufuhr für hydraulisches oder pneumatisches Fluid verwendbar ist und auch nach langer Einsatzdauer eine sichere Verriegelung des Spannbolzens an der Spannvorrichtung im Spannzustand der Spannvorrichtung gewährleistet, wird vorgeschlagen, dass die Spannvorrichtung einen elektromotorischen Antrieb zum Bewegen des Kolbens von einer Freigabestellung in eine Spannstellung und/oder von einer Spannstellung in eine Freigabestellung umfasst.

## Beschreibung

Die vorliegende Erfindung betrifft eine Spannvorrichtung zum Einspannen eines an einem Werkstück oder an einem Werkstückträger angeordneten Spannbolzens, wobei die Spannvorrichtung Verriegelungselemente und einen Kolben zum Bewegen der Verriegelungselemente aus einer Freigabestellung in eine Verriegelungsstellung umfasst.

Bei bekannten Spannvorrichtungen dieser Art umfasst die Spannvorrichtung Federelemente, welche auf den Kolben der Spannvorrichtung einwirken, um denselben in eine Spannstellung vorzuspannen, und eine Vorrichtung zum Beaufschlagen des Kolbens mit einem hydraulischen Fluid oder einem pneumatischen Fluid, um den Kolben von der Spannstellung in eine Freigabestellung zu bewegen.

Es steht jedoch nicht an allen Bearbeitungsorten eine Zufuhr für hydraulisches oder pneumatisches Fluid zur Verfügung.

Ferner können Federelemente spröde werden und ihre elastische Rückstellkraft verlieren, was die Sicherung des Spannbolzens an der Spannvorrichtung im Spannzustand der Spannvorrichtung beinträchtigen könnte.

Der vorliegenden Erfindung liegt die Aufgabe zugrunde, eine Spannvorrichtung der eingangs genannten Art zu schaffen, welche unabhängig vom Vorhandensein einer Zufuhr für hydraulisches oder pneumatisches Fluid verwendbar ist und auch nach langer Einsatzdauer eine sichere Verriegelung des Spannbolzens an der Spannvorrichtung im Spannzustand der Spannvorrichtung gewährleistet.

Diese Aufgabe wird bei einer Spannvorrichtung mit den Merkmalen des Oberbegriffs von Anspruch 1 erfindungsgemäß dadurch gelöst, dass die Spannvorrichtung einen elektromotorischen Antrieb zum Bewegen des Kolbens von einer Freigabestellung in eine Spannstellung und/oder von einer Spannstellung in eine Freigabestellung umfasst.

Bei einer bevorzugten Ausgestaltung der Erfindung ist vorgesehen, dass die Spannvorrichtung ein Gehäuse umfasst, in welchem der Kolben linear bewegbar geführt ist.

Der elektromotorische Antrieb der Spannvorrichtung ist vorzugsweise als ein Linearaktuator ausgebildet.

Das Gehäuse der Spannvorrichtung ist vorzugsweise mehrteilig ausgebildet und kann beispielsweise ein oberes Gehäuseteil, ein unteres Gehäuseteil und/oder ein Antriebsgehäuseteil umfassen.

Die Spannvorrichtung umfasst vorzugsweise eine Spannbolzenaufnahme, welche an einem Gehäusedeckel des Gehäuses festgelegt ist.

Bei einer bevorzugten Ausgestaltung der Erfindung ist vorgesehen, dass die Spannvorrichtung einen Verriegelungselementekäfig umfasst, welcher an einem Gehäusedeckel des Gehäuses festgelegt ist.

Dabei kann der Gehäusedeckel insbesondere einen Kolbenaufnahmeraum des Gehäuses, in welchem der Kolben linear bewegbar geführt ist, zumindest teilweise gegenüber einer Außenseite der Spannvorrichtung abdecken.

Die Spannbolzenaufnahme kann einstückig mit dem Verriegelungselementekäfig ausgebildet sein.

Die Spannbolzenaufnahme kann durch Reibschluss, durch Kraftschluss und/oder durch Formschluss an dem Gehäusedeckel festgelegt sein.

Beispielsweise kann vorgesehen sein, dass die Spannbolzenaufnahme mit dem Gehäusedeckel verschraubt ist.

Dabei weist vorzugsweise die Spannbolzenaufnahme ein Außengewinde und der Gehäusedeckel ein hierzu komplementäres Innengewinde auf.

Bei einer bevorzugten Ausgestaltung der Erfindung ist vorgesehen, dass die Spannvorrichtung eine Verdrehsicherung umfasst, durch welche der Kolben an einer Drehbewegung um eine Längsmittelachse der Spannvorrichtung gehindert ist.

Der Kolben der Spannvorrichtung ist vorzugsweise längs der Längsmittelachse linear bewegbar geführt, so dass eine Verschiebungsrichtung des Kolbens parallel zu der Längsmittelachse der Spannvorrichtung ausgerichtet ist.

Bei einer besonderen Ausgestaltung der Verdrehsicherung ist vorgesehen, dass die Verdrehsicherung eine Kolbenführungskugel umfasst.

Eine solche Kolbenführungskugel kann in eine Führungsnut eingreifen, welche an dem Kolben oder an dem Gehäuse der Spannvorrichtung ausgebildet ist.

Eine solche Führungsnut ist vorzugsweise parallel zu der Verschiebungsrichtung des Kolbens und/oder parallel zu einer Längsmittelachse der Spannvorrichtung ausgerichtet.

Alternativ oder ergänzend hierzu kann vorgesehen sein, dass die Verdrehsicherung eine nicht rotationssymmetrische Führungskontur an dem Kolben umfasst.

Eine solche nicht rotationssymmetrische Führungskontur an dem Kolben wirkt vorzugsweise mit einer ebenfalls nicht rotationssymmetrischen Führungskontur an einem Gehäuse der Spannvorrichtung, insbesondere an einer der Längsmittelachse der Spannvorrichtung zugewandten Innenseite des Gehäuses, zusammen, um den Kolben an einer Drehbewegung um die Längsmittelachse der Spannvorrichtung zu hindern.

Bei einer bevorzugten Ausgestaltung der Erfindung ist vorgesehen, dass die Spannvorrichtung ein Gewindeelement umfasst, wobei das Gewindeelement ein Gewinde umfasst, das mit einem Gewinde eines Rotors des elektromotorischen Antriebs in Eingriff steht.

Dabei kann vorgesehen sein, dass das Gewindeelement drehfest mit dem Kolben verbunden ist.

Ferner kann vorgesehen sein, dass das Gewindeelement gegen eine Verschiebung relativ zu dem Kolben längs der Verschiebungsrichtung des Kolbens und/oder längs der Längsmittelachse der Spannvorrichtung gesichert ist.

Beispielsweise kann vorgesehen sein, dass der Kolben mittels eines Gewindestifts drehfest an dem Gewindeelement gesichert ist.

Alternativ hierzu kann vorgesehen sein, dass das Gewindeelement einstückig mit dem Kolben ausgebildet ist.

Bei einer weiteren alternativen Ausgestaltung der Erfindung ist vorgesehen, dass der Kolben ein Gewinde aufweist, das mit einem Gewinde eines Rotors des elektromotorischen Antriebs in Eingriff steht. Auf diese Weise kann die Drehbewegung des Rotors des elektromotorischen Antriebs in eine Linearbewegung des Kolbens längs der Verschiebungsrichtung des Kolbens und/oder längs der Längsmittelachse der Spannvorrichtung gewandelt werden.

Um den elektromotorischen Antrieb der Spannvorrichtung zu steuern, um Daten über den Betriebszustand des elektromotorischen Antriebs an eine übergeordnete Steuervorrichtung zu übermitteln und/oder um dem elektromotorischen Antrieb elektrische Energie zuzuführen, ist die Spannvorrichtung vorzugsweise mit mindestens einem elektrischen Anschluss versehen.

Dabei kann vorgesehen sein, dass die Spannvorrichtung ein Gehäuseteil umfasst, welches an einer parallel zu einer Verschiebungsrichtung des Kolbens und/oder parallel zu der Längsmittelachse der Spannvorrichtung ausgerichteten Seitenfläche mit einem elektrischen Anschluss versehen ist.

Alternativ oder ergänzend hierzu kann vorgesehen sein, dass die Spannvorrichtung ein Gehäuseteil umfasst, welches mit einem elektrischen Anschluss versehen ist, dessen Anschlusspins parallel zu einer Verschiebungsrichtung des Kolbens und/oder zu der Längsmittelachse der Spannvorrichtung zu einer Oberseite der Spannvorrichtung weisen, an welcher ein Innenraum einer Spannbolzenaufnahme der Spannvorrichtung mündet.

Alternativ oder ergänzend hierzu kann vorgesehen sein, dass die Spannvorrichtung ein Gehäuseteil umfasst, aus welchem ein elektrisches Anschlusskabel der Spannvorrichtung in einer von einer Oberseite der Spannvorrichtung, an welcher ein Innenraum einer Spannbolzenaufnahme der Spannvorrichtung mündet, weg weisenden Richtung herausgeführt ist.

Bei einer bevorzugten Ausgestaltung der Erfindung ist vorgesehen, dass die Spannvorrichtung mindestens zwei elektrische Anschlüsse aufweist, wobei mindestens ein Signalanschluss zum Anschließen einer Encoder-Signalleitung und mindestens ein Leistungsanschluss zum Anschließen einer elektrischen Leistungsleitung ausgebildet ist.

Mittels der Encoder-Signalleitung ist vorzugsweise ein Signal an eine übergeordnete externe Steuervorrichtung außerhalb der Spannvorrichtung übertragbar, aus welchem hervorgeht, in welcher Winkellage der Rotor des elektromotorischen Antriebs sich befindet und/oder in welcher Winkellage und/oder in welcher axialen Position in Bezug auf die Verschiebungsrichtung des Kolbens und/oder in Bezug auf die Längsmittelachse der Spannvorrichtung sich das Gewindeelement der Spannvorrichtung befindet.

Weitere Merkmale und Vorteile der Erfindung sind Gegenstand der nachfolgenden Beschreibung und der zeichnerischen Darstellung von Ausführungsbeispielen.

In den Zeichnungen zeigen:

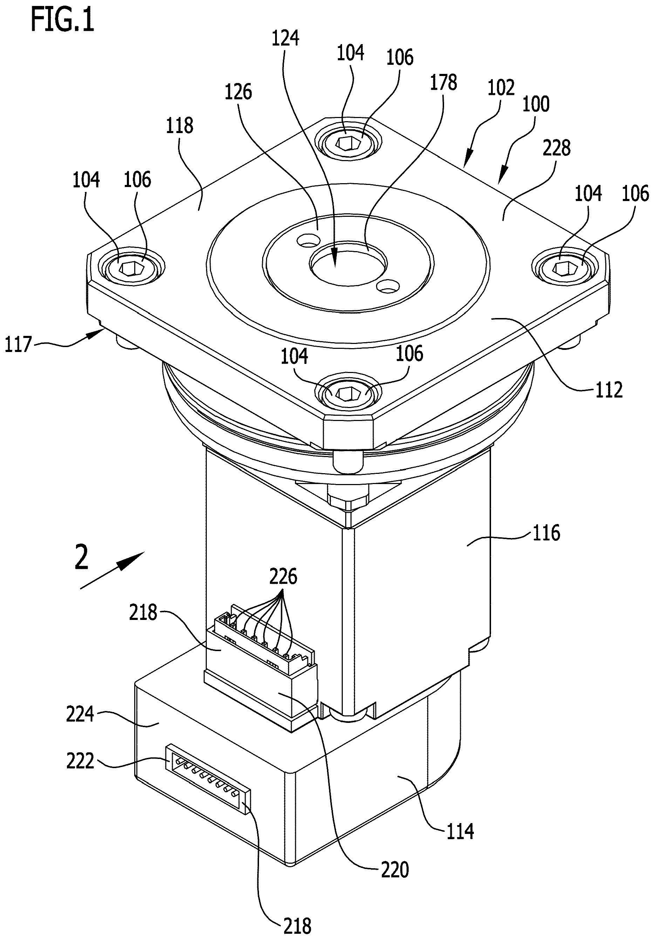

- Fig. 1: eine perspektivische Darstellung einer Spannvorrichtung zum Einspannen eines an einem Werkstück oder an einem Werkstückträger angeordneten Spannbolzens, wobei die Spannvorrichtung Verriegelungselemente und einen Kolben zum Bewegen der Verriegelungselemente aus einer Freigabestellung in eine Verriegelungsstellung umfasst und wobei die Spannvorrichtung einen elektromotorischen Antrieb zum Bewegen des Kolbens von einer Freigabestellung in eine Spannstellung und/oder von einer Spannstellung in eine Freigabestellung umfasst, mit Blick auf eine Oberseite der Spannvorrichtung, an welcher ein Innenraum einer Spannbolzenaufnahme der Spannvorrichtung mündet;
- Fig. 2: eine Seitenansicht der Spannvorrichtung aus Fig. 1, mit der Blickrichtung auf eine Seite der Spannvorrichtung, an welcher zwei elektrische Anschlüsse der Spannvorrichtung angeordnet sind, mit der Blickrichtung in Richtung des Pfeiles 2 in Fig. 1;
- Fig. 3: eine weitere Seitenansicht der Spannvorrichtung aus den Fig. 1 und 2, mit der Blickrichtung in Richtung des Pfeiles 3 in Fig. 2;
- Fig. 4: eine Draufsicht von oben auf die Spannvorrichtung aus den Fig. 1 bis 3, mit der Blickrichtung in Richtung des Pfeiles 4 in Fig. 2;
- Fig. 5: einen Längsschnitt durch die Spannvorrichtung aus den Fig. 1 bis 4, längs der Linie 5 - 5 in Fig. 4;
- Fig. 6: eine perspektivische Darstellung der Spannvorrichtung aus den Fig. 1 bis 5 und eines Werkstückträgers mit einem daran angeordneten Spannbolzen, wobei der Spannbolzen sich außerhalb der Spannbolzenaufnahme der Spannvorrichtung befindet;
- Fig. 7: eine der Fig. 6 entsprechende perspektivische Darstellung der Spannvorrichtung und des Werkstückträgers mit dem daran angeordneten Spannbolzen, wobei der Spannbolzen sich in der Spannbolzenaufnahme der Spannvorrichtung befindet;
- Fig. 8: einen Längsschnitt durch die Spannvorrichtung und den Werkstückträger mit dem Spannbolzen aus den Fig. 6 und 7, wobei der Spannbolzen sich außerhalb der Spannbolzenaufnahme der Spannvorrichtung befindet, längs der Linie 8 - 8 in Fig. 4;
- Fig. 9: einen der Fig. 8 entsprechenden Längsschnitt durch die Spannvorrichtung und den Werkstückträger mit dem Spannbolzen, wobei der Spannbolzen sich in der Spannbolzenaufnahme der Spannvorrichtung befindet, der Kolben der Spannvorrichtung sich in der Freigabestellung befindet und die Verriegelungselemente der Spannvorrichtung sich in der Freigabestellung befinden;
- Fig. 10: einen der Fig. 9 entsprechenden Längsschnitt durch die Spannvorrichtung und den Werkstückträger mit dem Spannbolzen, wobei der Spannbolzen sich in der Spannbolzenaufnahme der Spannvorrichtung befindet, der Kolben der Spannvorrichtung sich in der Spannstellung befindet und die Verriegelungselemente der Spannvorrichtung sich in der Verriegelungsstellung befinden;
- Fig. 11: einen Längsschnitt durch die Spannvorrichtung und den Werkstückträger mit dem Spannbolzen, wobei der Spannbolzen sich in der Spannbolzenaufnahme der Spannvorrichtung befindet, der Kolben der Spannvorrichtung sich in der Spannstellung befindet und die Verriegelungselemente der Spannvorrichtung sich in der Verriegelungsstellung befinden, längs der Linie 11 - 11 in Fig. 4;
- Fig. 12: eine perspektivische Explosionsdarstellung einer zweiten Ausführungsform einer Spannvorrichtung zum Einspannen eines an einem Werkstück oder an einem Werkstückträger angeordneten Spannbolzens, wobei der Kolben der Spannvorrichtung einstückig mit einem Gewindeelement der Spannvorrichtung ausgebildet ist, wobei das Gewindeelement ein Gewinde umfasst, das mit einem Gewinde eines Rotors des elektromotorischen Antriebs in Eingriff steht;
- Fig. 13: einen Längsschnitt durch die Spannvorrichtung aus Fig. 12, wobei der Kolben der Spannvorrichtung sich in einer Freigabestellung befindet und die Verriegelungselemente der Spannvorrichtung sich in einer Freigabestellung befinden;
- Fig. 14: eine Seitenansicht einer dritten Ausführungsform einer Spannvorrichtung zum Einspannen eines an einem Werkstück oder an einem Werkstückträger angeordneten Spannbolzens;
- Fig. 15: einen Querschnitt durch die Spannvorrichtung aus Fig. 14, längs der Linie 15 - 15 in Fig. 14;
- Fig. 16: eine perspektivische Explosionsdarstellung der Spannvorrichtung aus den Fig. 14 und 15;
- Fig. 17: einen Längsschnitt durch die Spannvorrichtung aus den Fig. 14 bis 16, wobei der Kolben der Spannvorrichtung sich in der Freigabestellung befindet und die Verriegelungselemente der Spannvorrichtung sich in der Freigabestellung befinden, wobei der Kolben der Spannvorrichtung mittels einer polygonalen, beispielsweise achteckigen, Führungskontur an seinem Umfang an einer komplementär hierzu ausgebildeten Führungskontur eines Gehäuses der Spannvorrichtung längs einer Axialrichtung der Spannvorrichtung verschiebbar geführt ist;
- Fig. 18: eine perspektivische Explosionsdarstellung einer vierten Ausführungsform einer Spannvorrichtung zum Einspannen eines an einem Werkstück oder an einem Werkstückträger angeordneten Spannbolzens, wobei der Kolben der Spannvorrichtung ein Gewinde aufweist, das mit einem Gewinde eines Rotors des elektromotorischen Antriebs der Spannvorrichtung in Eingriff steht;
- Fig. 19: einen Längsschnitt durch die Spannvorrichtung aus Fig. 18, wobei der Kolben der Spannvorrichtung sich in der Freigabestellung befindet und die Verriegelungselemente der Spannvorrichtung sich in der Freigabestellung befinden;
- Fig. 20: eine perspektivische Darstellung einer fünften Ausführungsform einer Spannvorrichtung zum Einspannen eines an einem Werkstück oder an einem Werkstückträger angeordneten Spannbolzens, wobei die Spannvorrichtung ein Gehäuseteil umfasst, aus welchem ein elektrisches Anschlusskabel der Spannvorrichtung in einer von einer Oberseite der Spannvorrichtung, an welcher ein Innenraum der Spannbolzenaufnahme der Spannvorrichtung mündet, weg weisenden Richtung herausgeführt ist, mit der Blickrichtung auf die Oberseite der Spannvorrichtung;
- Fig. 21: eine Seitenansicht der Spannvorrichtung aus Fig. 20;
- Fig. 22: eine Draufsicht von oben auf die Spannvorrichtung aus den Fig. 20 und 21;
- Fig. 23: einen Längsschnitt durch die Spannvorrichtung aus den Fig. 20 bis 22, wobei der Kolben der Spannvorrichtung sich in der Spannstellung befindet und die Verriegelungselemente der Spannvorrichtung sich in der Verriegelungsstellung befinden, wobei der Kolben der Spannvorrichtung ein Gewinde aufweist, das mit einem Gewinde eines Rotors des elektromotorischen Antriebs der Spannvorrichtung in Eingriff steht; und
- Fig. 24: eine perspektivische Explosionsdarstellung der Spannvorrichtung aus den Fig. 20 bis 23.

Gleiche oder funktional äquivalente Elemente sind in allen Figuren mit denselben Bezugszeichen bezeichnet.

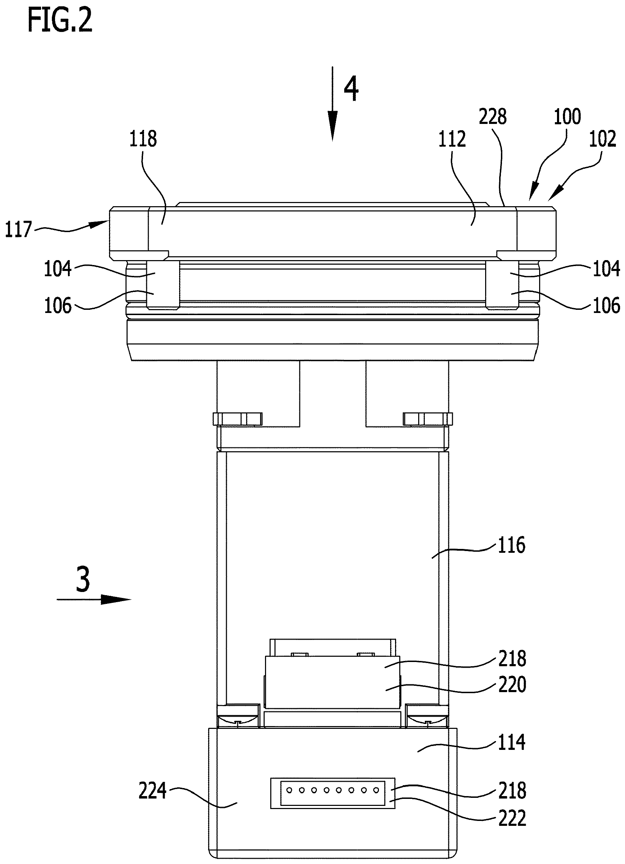

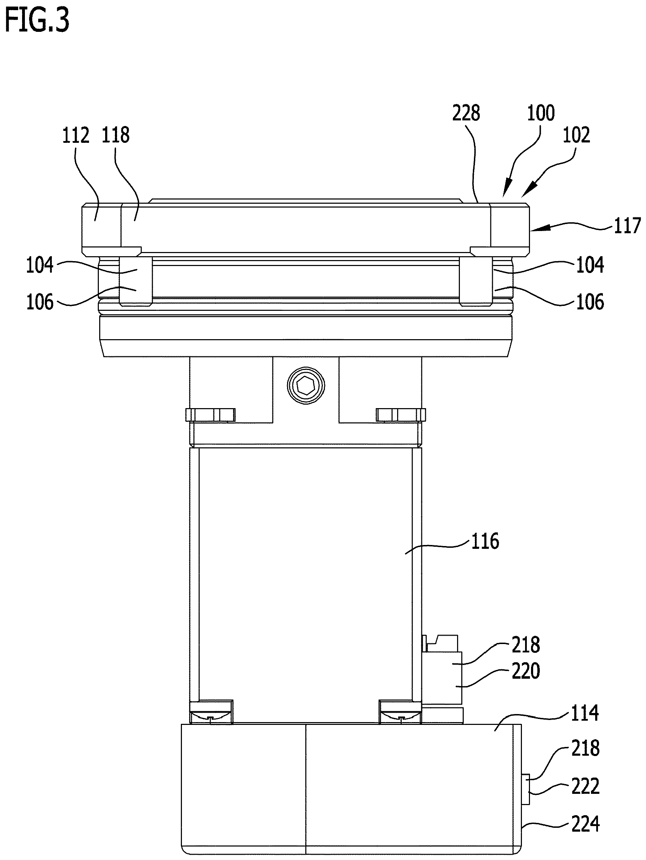

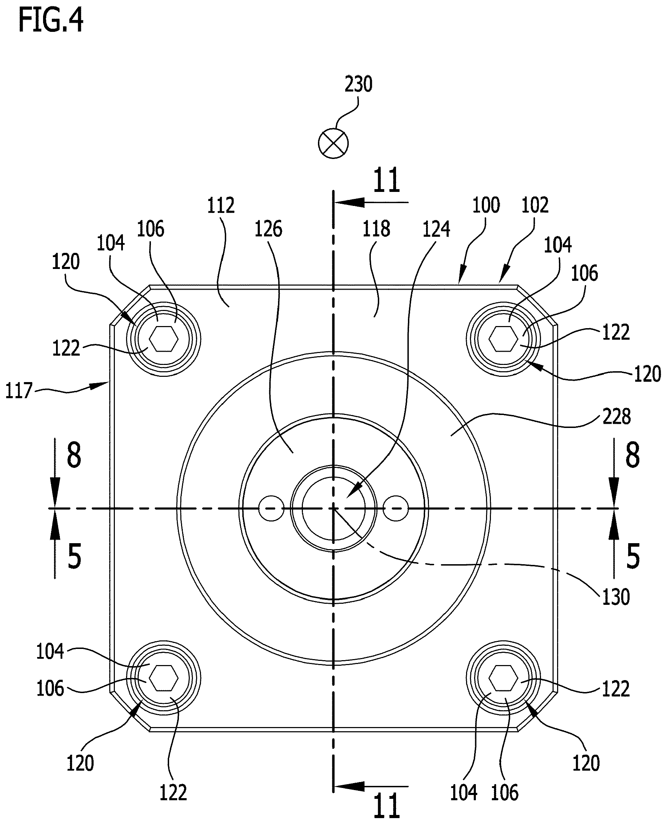

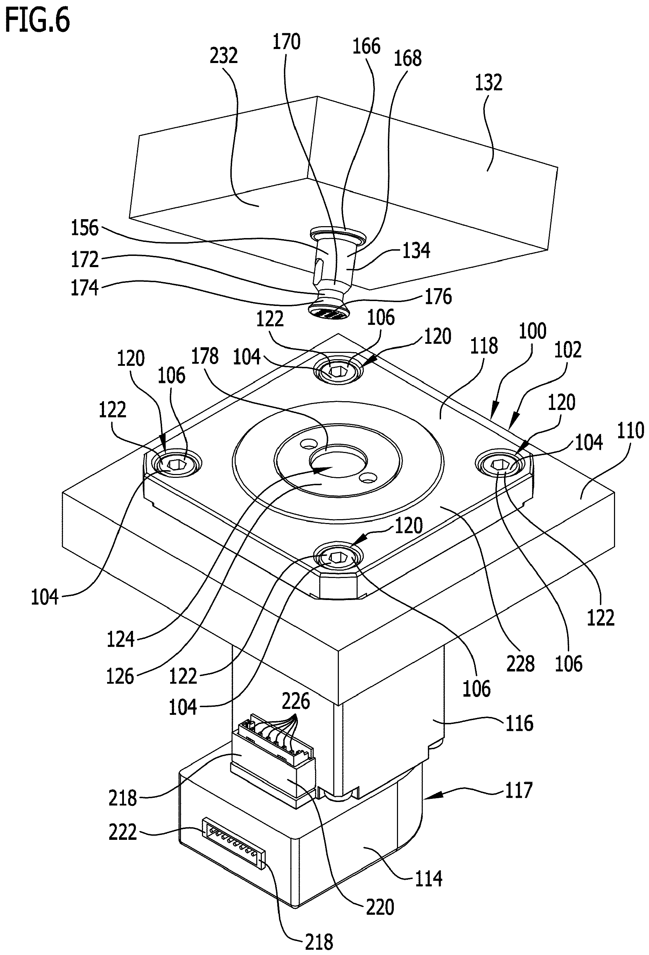

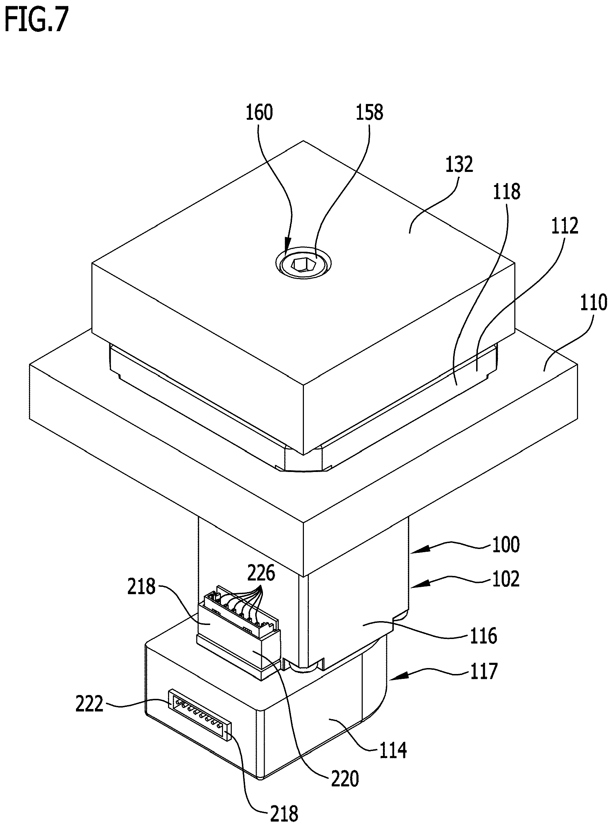

Eine in den Fig. 1 bis 11 dargestellte erste Ausführungsform einer als Ganzes mit 100 bezeichneten Spannvorrichtung ist als ein Schnellspannmodul 102 ausgebildet, welches mittels Befestigungsmitteln 104, beispielsweise Schrauben 106, an einer Spannvorrichtungsaufnahme 108 eines Maschinentisches 110 oder einer Aufspannplatte befestigbar ist (siehe insbesondere die Fig. 6 bis 11).

Die Spannvorrichtung 100 umfasst ein Gehäuse 117, welches beispielsweise ein oberes Gehäuseteil 112, ein unteres Gehäuseteil 114 und/oder ein zwischen dem oberen Gehäuseteil 112 und dem unteren Gehäuseteil 114 angeordnetes Antriebsgehäuseteil 116 umfasst.

Das obere Gehäuseteil 112 ist vorzugsweise als ein Gehäusedeckel 118 ausgebildet und weist gestufte Durchtrittsöffnungen 120 auf, welche jeweils einen Kopf 122 und einen dem Kopf 122 zugewandten Teil des Schaftes jeweils einer Schraube 106 aufnehmen.

Im montierten Zustand der Spannvorrichtung 100 greifen die Schrauben 106 in hierzu komplementär ausgebildete (nicht dargestellte) Gewindebohrungen des Maschinentisches 110 ein, um die Spannvorrichtung 100 an dem Maschinentisch 110 zu fixieren.

Das obere Gehäuseteil 112 weist ferner eine mittige Ausnehmung 124 auf, in deren oberen Abschnitt eine Spannbolzenaufnahme 126 eingesetzt ist und in deren unterem, dem unteren Gehäuseteil 114 zugewandten, Abschnitt ein Kolben 128 der Spannvorrichtung 100 parallel zur Längsmittelachse 130 der Spannvorrichtung 100, welche mit der Längsmittelachse 130 der mittigen Ausnehmung 124 des oberen Gehäuseteils 112 übereinstimmt, verschiebbar geführt ist.

In die Spannbolzenaufnahme 126 der Spannvorrichtung 100 ist ein an einem Werkstückträger 132 oder unmittelbar an einem Werkstück festgelegter Spannbolzen 134 einführbar.

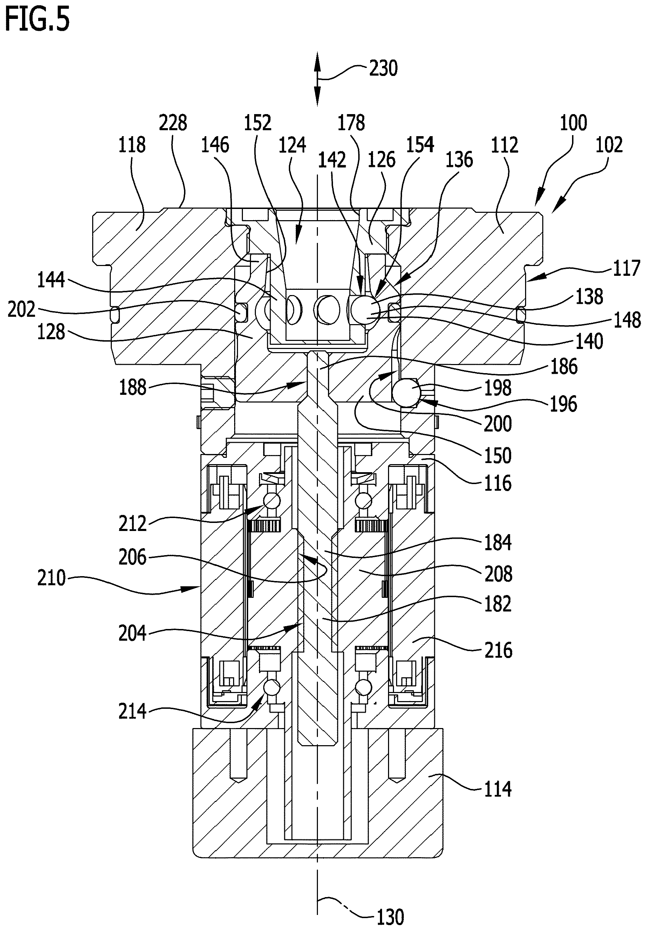

In den Fig. 5, 8 und 9 ist ein Freigabezustand der Spannvorrichtung 100 dargestellt, in welchem der Spannbolzen 134 in die Spannbolzenaufnahme 126 einführbar oder aus der Spannbolzenaufnahme 126 entnehmbar ist.

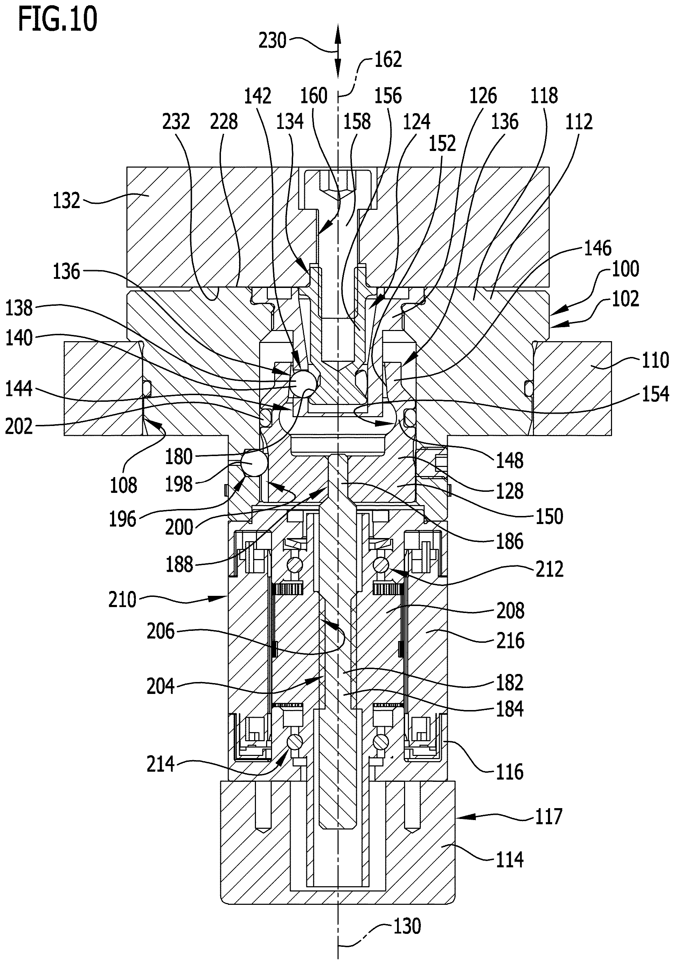

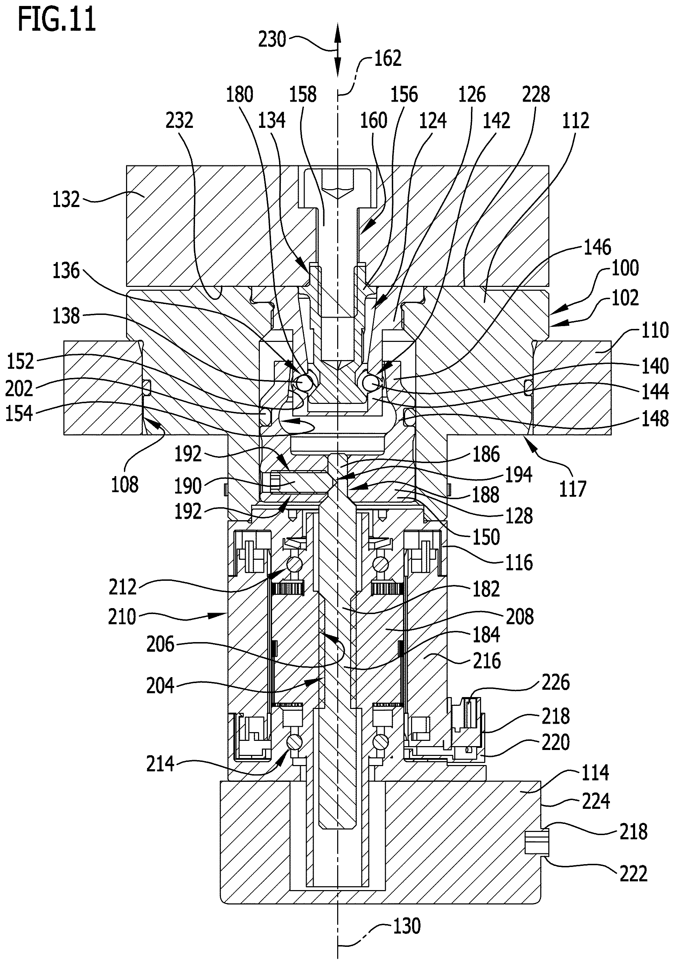

In den Fig. 10 und 11 ist die Spannvorrichtung 100 in einem Spannzustand dargestellt, in welchem die Spannvorrichtung 100 den Spannbolzen 134 in der Spannbolzenaufnahme 126 zurückhält.

Zur Verriegelung des Spannbolzens 134 in der Spannbolzenaufnahme 126 im Spannzustand der Spannvorrichtung 100 dient ein Verriegelungssystem 136 der Spannvorrichtung 100, welches den Kolben 128 der Spannvorrichtung 100 und Verriegelungselemente 138 umfasst.

Dabei sind die Verriegelungselemente 138 in der hier dargestellten Ausführungsform einer Spannvorrichtung 100 als jeweils eine Verriegelungskugel 140 ausgebildet.

Das Verriegelungssystem 136 umfasst mehrere, vorzugsweise mindestens drei, im zeichnerisch dargestellten Ausführungsbeispiel fünf, Verriegelungselemente 138, welche längs einer Umfangsrichtung der Spannbolzenaufnahme 126 aufeinander folgen.

Jedes der Verriegelungselemente 138 ist in jeweils einer dem betreffenden Verriegelungselement 138 zugeordneten Verriegelungselement-Durchtrittsöffnung 142 in der Spannbolzenaufnahme 126 aufgenommen.

Die Verriegelungselement-Durchtrittsöffnungen 142 verjüngen sich radial nach innen, das heißt zu der Längsmittelachse 130 der Spannvorrichtung 100 hin, so dass die Verriegelungselemente 138 durch die Spannbolzenaufnahme 126 daran gehindert sind, vollständig in den Innenraum der Spannbolzenaufnahme 126 hinein zu gelangen.

Die Spannbolzenaufnahme 126 mit den Verriegelungselement-Durchtrittsöffnungen 142 bildet somit einen Verriegelungselementekäfig 144, welcher die Verriegelungselemente 138 unverlierbar in der Spannvorrichtung 100 zurückhält und die Verriegelungselemente 138 längs der Umfangsrichtung der Spannbolzenaufnahme 126 auf Abstand voneinander hält.

An der Spannbolzenaufnahme 126 sind die Verriegelungselemente 138 der Spannvorrichtung 100 vorzugsweise längs der Umfangsrichtung der Spannbolzenaufnahme 126 im Wesentlichen äquidistant angeordnet.

Der Kolben 128 umfasst einen Verdrängungsabschnitt 146, einen sich nach unten an den Verdrängungsabschnitt 146 angrenzenden Freigabeabschnitt 148 und einen sich an den Freigabeabschnitt 148 nach unten anschließenden Bodenabschnitt 150.

Der Verdrängungsabschnitt 146 des Kolbens 128 umfasst eine radial nach innen, das heißt zu der Längsmittelachse 130 der Spannvorrichtung 100 hin, weisende Verdrängungsschräge 152, welche gegenüber der Längsmittelachse 130 der Spannvorrichtung 100 um einen kleinen spitzen Winkel geneigt ist.

Dabei beträgt der kleine spitze Winkel, um den die Verdrängungsschräge 152 gegenüber der Längsmittelachse 130 der Spannvorrichtung 100 geneigt ist, vorzugsweise weniger als 8°, insbesondere weniger als 6°, beispielsweise ungefähr 5°.

Ferner beträgt der kleine spitze Winkel, um den die Verdrängungsschräge 152 des Kolbens 128 gegenüber der Längsmittelachse 130 der Spannvorrichtung 100 geneigt ist, vorzugsweise mehr als 2°, insbesondere mehr als 4°, beispielsweise ungefähr 5°.

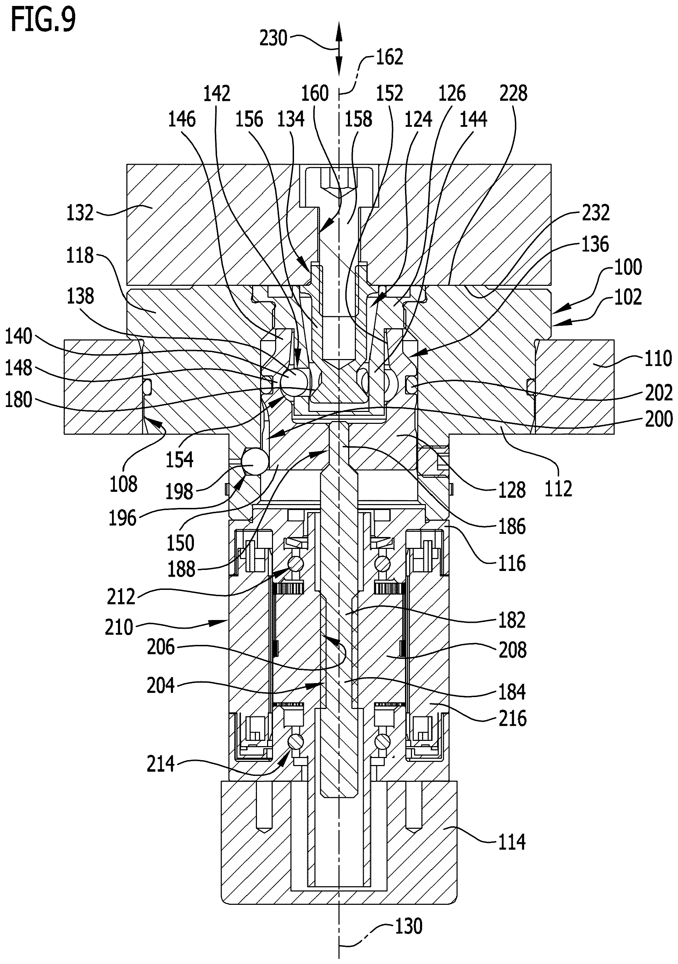

Wenn der Kolben 128 von der in Fig. 9 dargestellten Freigabestellung in die Fig. 10 dargestellte Verriegelungsstellung verschoben wird, verdrängt die Verdrängungsschräge 152 des Verdrängungsabschnitts 146 des Kolbens 128 die Verriegelungselemente 138 aus ihrer in Fig. 9 dargestellten Freigabestellung radial nach innen, das heißt zu der Längsmittelachse 130 der Spannvorrichtung 100 hin, so dass die Verriegelungselemente 138 in Eingriff mit dem Spannbolzen 134 kommen.

Der Freigabeabschnitt 148 des Kolbens 128 umfasst eine Freigabeausnehmung 154, welche an der der Längsmittelachse 130 der Spannvorrichtung 100 zugewandten Innenseite des Freigabeabschnitts 148 ausgebildet ist und zur (teilweisen) Aufnahme der Verriegelungselemente 138 im Freigabezustand der Spannvorrichtung 100 dient.

Statt einer einzigen Freigabeausnehmung 154, welche sich in der Umfangsrichtung des Kolbens 128 um die gesamte Innenseite des Kolbens 128 herum erstreckt, kann auch vorgesehen sein, dass der Freigabeabschnitt 148 des Kolbens 128 für jedes Verriegelungselement 138 jeweils eine diesem Verriegelungselement 138 zugeordnete separate Freigabeausnehmung 154 umfasst, wobei diese Freigabeausnehmungen 154 dann in der Umfangsrichtung des Kolbens 128 vorzugsweise voneinander beabstandet sind.

Wenn der Kolben 128 von der in Fig. 10 dargestellten Spannstellung in die in Fig. 9 dargestellte Freigabestellung bewegt wird, so gelangt die Freigabeausnehmung 154 des Freigabeabschnitts 148 des Kolbens 128 in den Bereich der Verriegelungselemente 138, so dass die Verriegelungselemente 138 sich radial nach außen, das heißt von der Längsmittelachse 130 der Spannvorrichtung 100 weg, in die Freigabeausnehmung 154 hinein bewegen können, wodurch die Verriegelungselemente 138 in ihre jeweilige Freigabestellung gelangen, in welcher sie nicht mehr in Eingriff mit dem Spannbolzen 134 stehen.

Wie am besten aus Fig. 10 zu ersehen ist, liegt im Spannzustand der Spannvorrichtung 100, in welchem der Spannbolzen 134 in der Spannbolzenaufnahme 126 der Spannvorrichtung 100 verriegelt ist, jedes der Verriegelungselemente 138 lastübertragend an dem Kolben 128 der Spannvorrichtung 100, an der Spannbolzenaufnahme 126 und an dem Spannbolzen 134 an.

Der Spannbolzen 134, welcher an einem Werkstückträger 132 oder unmittelbar an einem (nicht dargestellten) Werkstück festgelegt ist, umfasst bei dem zeichnerisch dargestellten Ausführungsbeispiel eine Spannbolzenhülse 156, welche mittels einer Befestigungsschraube 158 an dem Werkstückträger 132, beispielsweise an einer gestuften Durchtrittsbohrung 160 des Werkstückträgers 132, gehalten ist.

Die Spannbolzenhülse 156 ist im Wesentlichen rotationssymmetrisch zu ihrer Längsmittelachse 162 ausgebildet, welche im Spannzustand der Spannvorrichtung 100 im Wesentlichen mit der Längsmittelachse 130 der Spannvorrichtung 100 zusammenfällt.

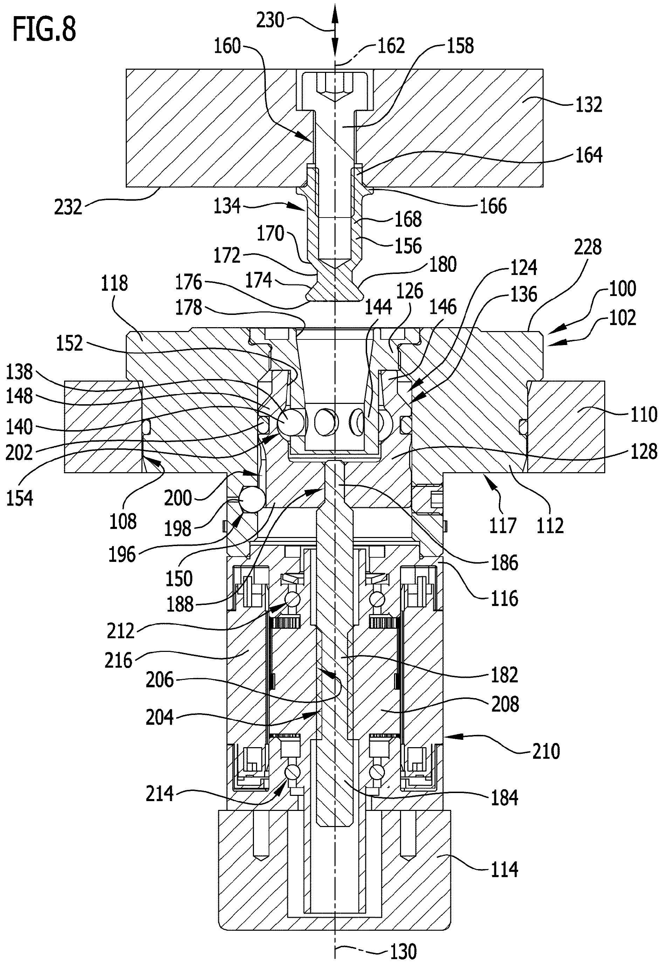

Wie am besten aus der Schnittdarstellung in Fig. 8 zu ersehen ist, umfasst die Spannbolzenhülse 156 einen Sockelabschnitt 164, einen sich an den Sockelabschnitt 164 anschließenden Zentrierabschnitt 166, einen sich an den Zentrierabschnitt 166 anschließenden ersten zylindrischen Abschnitt 168, einen sich an den ersten zylindrischen Abschnitt 168 anschließenden ersten konischen Abschnitt 170, einen sich an den ersten konischen Abschnitt 170 anschließenden zweiten zylindrischen Abschnitt 172, einen sich an den zweiten zylindrischen Abschnitt 172 anschließenden zweiten konischen Abschnitt 174 und einen sich an den zweiten konischen Abschnitt 174 anschließenden Endabschnitt 176.

Der Sockelabschnitt 164 der Spannbolzenhülse 156 greift in die gestufte Durchtrittsbohrung 160 des Werkstückträgers 132 ein, wenn der Spannbolzen 134 an dem Werkstückträger 132 montiert ist.

Der Zentrierabschnitt 166 der Spannbolzenhülse 156 liegt im Spannzustand der Spannvorrichtung 100 mit seiner zylindrischen Umfangsfläche an einer zylindrischen Zentrierfläche 178 an der der Längsmittelachse 130 der Spannvorrichtung 100 zugewandten Innenseite der Spannbolzenaufnahme 126 an, um so den Spannbolzen 134 in der Spannbolzenaufnahme 126 der Spannvorrichtung 100 zu zentrieren.

Der erste konische Abschnitt 170 und der zweite zylindrische Abschnitt 172 der Spannbolzenhülse 156 begrenzen eine Ausnehmung an dem Umfang des Spannbolzens 134, in welche die Verriegelungselemente 138 im Spannzustand der Spannvorrichtung 100 eingreifen können, ohne in diesem Bereich den Spannbolzen 134 zu berühren.

Der zweite konische Abschnitt 174 der Spannbolzenhülse 156 weist eine konische Verriegelungselement-Kontaktfläche 180 auf, an welcher im Spannzustand der Spannvorrichtung 100 die Verriegelungselemente 138 lastübertragend anliegen.

Die Verriegelungselement-Kontaktfläche 180 des Spannbolzens 134 ist gegenüber der Längsmittelachse 162 des Spannbolzens 134 und damit auch gegenüber der Längsmittelachse 130 der Spannvorrichtung 100 um einen spitzen Winkel geneigt.

Dieser spitze Winkel beträgt vorzugsweise weniger als 45°, insbesondere weniger als 40°, beispielsweise ungefähr 35°.

Ferner beträgt dieser spitze Winkel vorzugsweise mehr als 25°, insbesondere mehr als 30°, beispielsweise ungefähr 35°.

Mit dem Endabschnitt 176 der Spannbolzenhülse 156 ist der Spannbolzen 134 an einem unterhalb der Verriegelungselement-Durchtrittsöffnungen 142 liegenden Abschnitt der Innenseite der Spannbolzenaufnahme 126 der Spannvorrichtung 100 geführt.

Wie am besten aus den Fig. 5 und 8 bis 11 zu ersehen ist, ist der Kolben 128 der Spannvorrichtung 100 vorzugsweise an seinem Bodenabschnitt 150 mit einem Gewindeelement 182 der Spannvorrichtung 100 verbunden.

Das Gewindeelement 182 ist bei der zeichnerisch dargestellten Ausführungsform als eine Gewindestange 184 ausgebildet, welche sich längs der Längsmittelachse 130 der Spannvorrichtung 100 erstreckt.

Ein kolbenseitiger Endbereich 186 des Gewindeelements 182 greift in eine Gewindeelementaufnahme 188 des Kolbens 128 ein, welche an dem Bodenabschnitt 150 des Kolbens 128 ausgebildet ist.

Die Verbindung des Gewindeelements 182 mit dem Kolben 128 ist so ausgebildet, dass der Kolben 128 sowohl gegen eine Verdrehung relativ zu dem Gewindeelement 182 um die Längsmittelachse 130 der Spannvorrichtung 100 gesichert ist als auch gegen eine axiale Verschiebung relativ zu dem Gewindeelement 182 längs der Längsmittelachse 130 der Spannvorrichtung 100 gesichert ist.

Diese Sicherung gegen eine Relativbewegung zwischen dem Kolben 128 und dem Gewindeelement 182 erfolgt bei dem in den Fig. 1 bis 11 dargestellten Ausführungsbeispiel mittels eines Gewindestifts 190, welcher sich aus einer radialen Gewindebohrung 192, die an dem Kolben 128 vorgesehen ist, in eine Gewindestiftaufnahme 194 am Umfang des Gewindeelements 182 hinein erstreckt, so dass der Kolben 128 durch Formschluss des Gewindestifts 190 mit dem Gewindeelement 182 sowohl gegen eine Verdrehung als auch gegen eine axiale Verschiebung relativ zu dem Gewindeelement 182 gesichert ist.

Alternativ hierzu kann auch vorgesehen sein, dass der Gewindestift 190 nicht in eine Gewindestiftaufnahme 194 des Gewindeelements 182 eingreift, sondern lediglich ein dem Gewindeelement 182 zugewandter Endbereich des Gewindestifts 190 so reibschlüssig mit dem Gewindeelement 182 zusammenwirkt, dass der Kolben 128 durch eine Klemmwirkung zwischen dem Gewindestift 190 und dem Gewindeelement 182 gegen eine Verdrehung relativ zu dem Gewindeelement 182 um die Längsmittelachse 130 der Spannvorrichtung 100 und auch gegen eine axiale Verschiebung des Kolbens 128 relativ zu dem Gewindeelement 182 längs der Längsmittelachse 130 der Spannvorrichtung 100 gesichert ist.

Der Kolben 128 ist ferner durch eine Verdrehsicherung 196 an einer Drehbewegung um seine Längsachse relativ zu dem Gehäuse 117 der Spannvorrichtung 100, insbesondere relativ zu dem oberen Gehäuseteil 112 der Spannvorrichtung 100, gehindert.

Wie am besten aus Fig. 10 zu ersehen ist, umfasst die Verdrehsicherung 196 bei der zeichnerisch dargestellten Ausführungsform eine Kolbenführungskugel 198, welche in eine Kolbenführungsnut 200, die an dem Kolben 128 ausgebildet ist, eingreift.

Die Kolbenführungsnut 200 verläuft in der Axialrichtung des Kolbens 128, das heißt parallel zu der Längsmittelachse 130 der Spannvorrichtung 100.

Hierdurch kann der Kolben 128 relativ zu dem oberen Gehäuseteil 112 parallel zur Längsmittelachse 130 der Spannvorrichtung 100 verschoben werden, um den Kolben 128 von der Freigabestellung in die Spannstellung oder von der Spannstellung in die Freigabestellung zu bewegen.

Zugleich ist dabei aber eine Verdrehung des Kolbens 128 relativ zu dem oberen Gehäuseteil 112 um die Längsmittelachse 130 der Spannvorrichtung 100 ausgeschlossen.

Der Kolben 128 ist ferner an seiner der Längsmittelachse 130 der Spannvorrichtung 100 abgewandten Außenseite mit einem Dichtelement 202 versehen, welches einen unteren Abschnitt der mittigen Ausnehmung 124 des oberen Gehäuseteils 112, in welchen sich das Gewindeelement 182 hinein erstreckt, gegenüber einem oberen Abschnitt der mittigen Ausnehmung 124, in welchem die Verriegelungselemente 138 angeordnet sind, - vorzugsweise fluiddicht - abdichtet.

Das Gewindeelement 182 der Spannvorrichtung 100 ist mit einem Außengewinde 204 versehen, das mit einem hierzu komplementären Innengewinde 206 eines Rotors 208 eines als Ganzes mit 210 bezeichneten elektromotorischen Antriebs der Spannvorrichtung 100 in Eingriff steht.

Der Rotor 208 ist mittels eines oberen Lagers 212 und eines unteren Lagers 214 um die Längsmittelachse 130 der Spannvorrichtung 100 drehbar an dem Antriebsgehäuseteil 116 gelagert.

Der elektromotorische Antrieb 210 der Spannvorrichtung 100 umfasst ferner einen Stator 216, welcher den Rotor 208 des elektromotorischen Antriebs 210 zumindest teilweise umgibt.

Durch das Zusammenwirken des Stators 216 und des Rotors 208 ist der Rotor 208 in Rotation um die Längsmittelachse 130 der Spannvorrichtung 100 versetzbar.

Da die axiale Position des Rotors 208 in Bezug auf die Längsmittelachse 130 der Spannvorrichtung 100 durch die beiden Lager 212 und 214 relativ zu dem Antriebsgehäuseteil 116 fixiert ist, führt die Rotation des Rotors 208 zu einer linearen Verschiebung des Gewindeelements 182, welches durch die drehfeste Festlegung an dem Kolben 128 und die Verdrehsicherung des Kolbens 128 relativ zu dem oberen Gehäuseteil 112 an einer Drehung um die Längsmittelachse 130 der Spannvorrichtung 100 gehindert ist.

Wenn der Rotor 208 in einer Freigaberichtung gedreht wird, so wird das Gewindeelement 182 längs der Längsmittelachse 130 der Spannvorrichtung 100 nach oben bewegt, wodurch der Kolben 128 in die in den Fig. 5, 8 und 9 dargestellte Freigabestellung gelangt.

Wenn der Rotor 208 in einer zu der Freigaberichtung entgegengesetzten Spannrichtung gedreht wird, so wird das Gewindeelement 182 längs der Längsmittelachse 130 der Spannvorrichtung 100 nach unten bewegt, so dass der Kolben 128 in die in den Fig. 10 und 11 dargestellte Spannstellung gelangt.

Der elektromotorische Antrieb 210 wirkt somit als ein Linearaktuator für das Gewindeelement 182 und den mit dem Gewindeelement 182 verbundenen Kolben 128 der Spannvorrichtung 100.

Die Spannvorrichtung 100 umfasst ferner eine (in den Zeichnungen nicht im Detail dargestellte) Steuerungsvorrichtung zum Steuern des Betriebs und insbesondere der Drehrichtung des elektromotorischen Antriebs 210.

Die Steuerungsvorrichtung der Spannvorrichtung 100 ist mit zwei elektrischen Anschlüssen 218 der Spannvorrichtung 100 verbunden, wobei bei der in den

Fig. 1 bis 11 dargestellten ersten Ausführungsform ein elektrischer Anschluss 218 als ein Leistungsanschluss 220 zum Anschließen einer elektrischen Leistungsleitung ausgebildet ist und ein weiterer elektrischer Anschluss 218 als ein Signalanschluss 222 zum Anschließen einer (nicht dargestellten) Encoder-Signalleitung ausgebildet ist.

Beide elektrische Anschlüsse 218 können jeweils als Stecker oder als Buchse ausgebildet sein.

Wie am besten aus Fig. 1 zu ersehen ist, ist das untere Gehäuseteil 114 der Spannvorrichtung 100 an einer vorzugsweise im Wesentlichen parallel zu der Längsmittelachse 130 der Spannvorrichtung 100 und damit zu der Verschiebungsrichtung des Kolbens 128 ausgerichteten Seitenfläche 224 mit einem der elektrischen Anschlüsse 218 versehen.

In dem dargestellten Ausführungsbeispiel ist dieser elektrische Anschluss 218 beispielsweise als ein Signalanschluss 222 ausgebildet.

Über den Signalanschluss 222 können Signale von der Spannvorrichtung 100 ausgegeben werden, welche Aufschluss über den aktuellen Zustand des elektromotorischen Antriebs 210 geben, insbesondere über die Position des Gewindeelements 182 relativ zu dem Rotor 208 und/oder relativ zu dem Stator 216 des elektromotorischen Antriebs 210 und/oder über die aktuelle Drehrichtung des elektromotorischen Antriebs 210.

Ferner ist bei der in den Fig. 1 bis 11 dargestellten ersten Ausführungsform einer Spannvorrichtung 100 das Antriebsgehäuseteil 116 mit einem der elektrischen Anschlüsse 218 versehen, wobei Anschlusspins 226 des elektrischen Anschlusses 218 im Wesentlichen parallel zu der Längsmittelachse 130 der Spannvorrichtung 100 und damit im Wesentlichen parallel zu der Verschiebungsrichtung des Kolbens 128 zu einer Oberseite 228 der Spannvorrichtung 100 weisen, an welcher die Spannbolzenaufnahme 126 der Spannvorrichtung 100 mündet.

Dieser elektrische Anschluss 218 ist vorzugsweise als der Leistungsanschluss 220 ausgebildet, über welchen der Spannvorrichtung 100 die zum Betrieb des elektromotorischen Antriebs 210 erforderliche elektrische Energie zugeführt wird.

Alternativ zu der vorstehenden Beschreibung kann auch vorgesehen sein, dass die Spannvorrichtung 100 keine interne Steuerungsvorrichtung umfasst, sondern der elektromotorische Antrieb 210 der Spannvorrichtung 100 über den Signalanschluss 222 von einer externen Steuerungsvorrichtung gesteuert wird.

Um mit der vorstehend unter Bezugnahme auf die Fig. 1 bis 11 beschriebenen Spannvorrichtung 100 den Werkstückträger 132 präzise und positionsgenau an der Spannvorrichtung 100 einspannen zu können, wird die Spannvorrichtung 100 zunächst in den in den Fig. 5, 8 und 9 dargestellten Freigabezustand überführt, in welchem die Verriegelungselemente 138 gegenüber dem in den Fig. 10 und 11 dargestellten Spannzustand in einer Radialrichtung der Längsmittelachse 130 der Spannvorrichtung 100 nach außen verschoben sind.

Dieser Freigabezustand der Spannvorrichtung 100 wird erreicht, indem der elektromotorische Antrieb 210 so betätigt wird, dass der Kolben 128 sich in seiner Verschiebungsrichtung 230 nach oben bewegt, so dass der Freigabeabschnitt 148 des Kolbens 128 an die axiale Position der Verriegelungselemente 138 gelangt, wodurch die Verriegelungselemente 138 in einer Radialrichtung der Längsmittelachse 130 der Spannvorrichtung 100 nach außen in die Freigabeausnehmung 154 des Kolbens 128 gelangen.

In diesem in den Fig. 5 und 8 dargestellten Freigabezustand der Spannvorrichtung 100 wird der Werkstückträger 132 so an die Spannvorrichtung 100 herangeführt, dass der an dem Werkstückträger 132 montierte Spannbolzen 134 in den Innenraum der Spannbolzenaufnahme 126 der Spannvorrichtung 100 hinein gelangt (siehe die Fig. 8 und 9).

Dabei wird der Spannbolzen 134 durch das Zusammenwirken des Zentrierabschnitts 166 der Spannbolzenhülse 156 einerseits und der zylindrischen Zentrierfläche 178 der Spannvorrichtung 100 andererseits so in der Spannbolzenaufnahme 126 zentriert, dass die Längsmittelachse 162 des Spannbolzens 134 zumindest im Wesentlichen mit der Längsmittelachse 130 der Spannvorrichtung 100 zusammenfällt.

Wenn sich der Spannbolzen 134 vollständig in der Spannbolzenaufnahme 126 befindet (und vorzugsweise eine der Spannvorrichtung 100 zugewandte Abstützfläche 232 des Werkstückträgers 132 - vorzugsweise flächig - an dem oberen Gehäuseteil 112 der Spannvorrichtung 100 anliegt), wird der elektromotorische Antrieb 210 in der Weise betätigt, dass der Kolben 128 von der in Fig. 9 dargestellten Freigabestellung längs der Verschiebungsrichtung 230 des Kolbens 128 nach unten, das heißt von dem Werkstückträger 132 weg, in die in den Fig. 10 und 11 dargestellte Spannstellung des Kolbens 128 bewegt wird.

Dabei werden die Verriegelungselemente 138 des Verriegelungssystems 136 von dem Verdrängungsabschnitt 146 des Kolbens 128 radial nach innen, das heißt zu der Längsmittelachse 130 der Spannvorrichtung 100 und zu dem Spannbolzen 134 hin, verdrängt, bis der in den Fig. 10 und 11 dargestellte Spannzustand der Spannvorrichtung 100 erreicht ist, in welchem der Spannbolzen 134 durch die Verriegelungselemente 138 in der Spannvorrichtung 100 verriegelt ist.

Dabei bildet die Verriegelungselement-Kontaktfläche 180 des Spannbolzens 134 eine Hinterschneidung, welche die Verriegelungselemente 138 im Spannzustand der Spannvorrichtung 100 hintergreift.

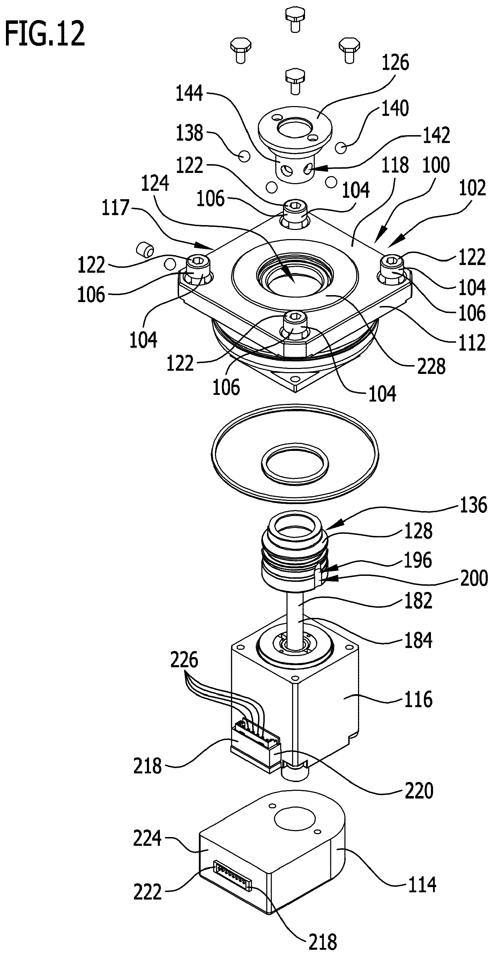

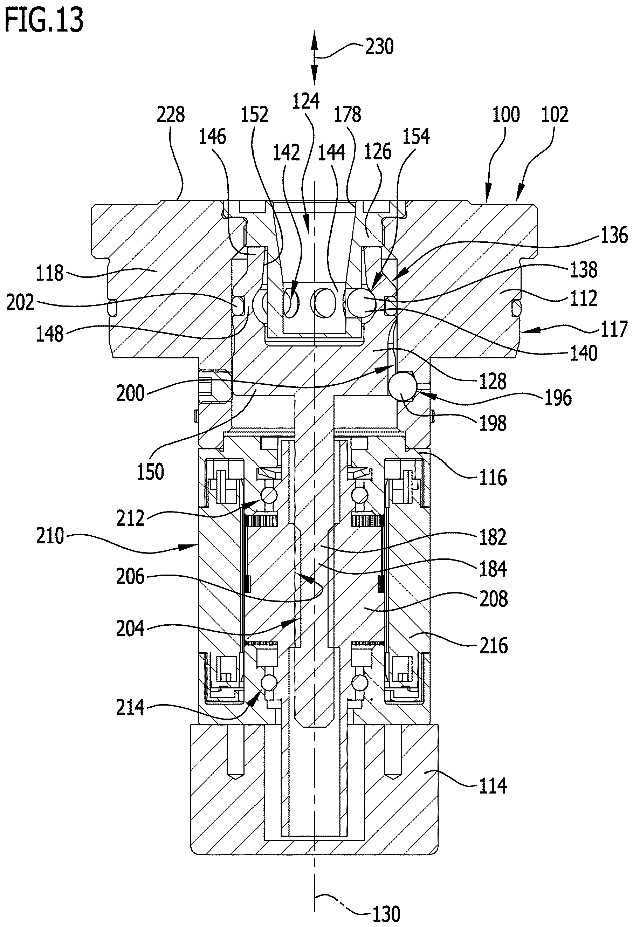

Eine in den Fig. 12 und 13 dargestellte zweite Ausführungsform einer Spannvorrichtung 100 unterscheidet sich von der in den Fig. 1 bis 11 dargestellten ersten Ausführungsform dadurch, dass der Kolben 128 und das Gewindeelement 182 nicht separat voneinander hergestellt und dann aneinander festgelegt worden sind, sondern einstückig miteinander ausgebildet sind.

Hierdurch entfällt die Notwendigkeit einer Befestigung des Kolbens 128 an dem Gewindeelement 182 mittels des Gewindestifts 190.

Im Übrigen stimmt die in den Fig. 12 und 13 dargestellte zweite Ausführungsform einer Spannvorrichtung hinsichtlich Aufbau, Funktion und Herstellungsweise mit der in den Fig. 1 bis 11 dargestellten ersten Ausführungsform überein, auf deren vorstehende Beschreibung insoweit Bezug genommen wird.

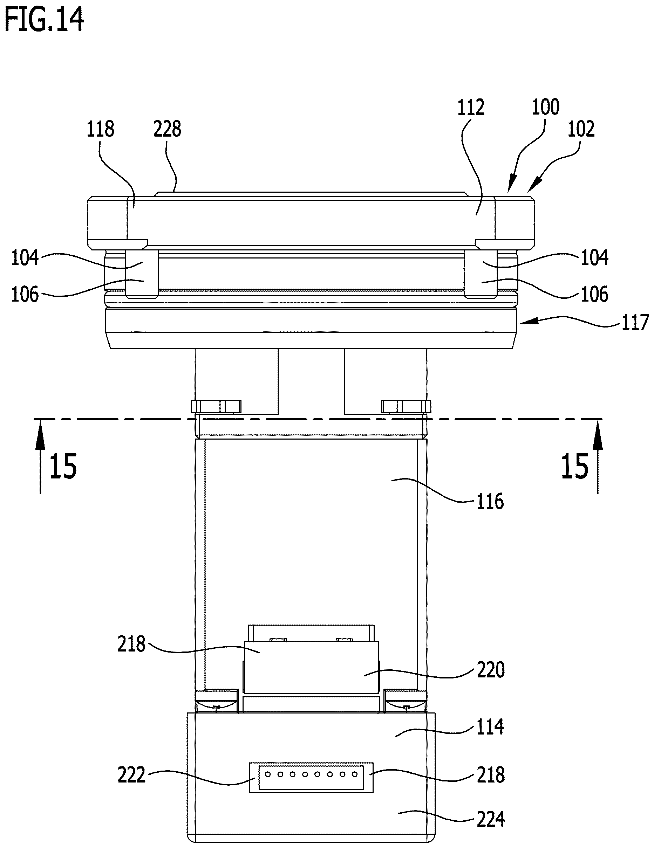

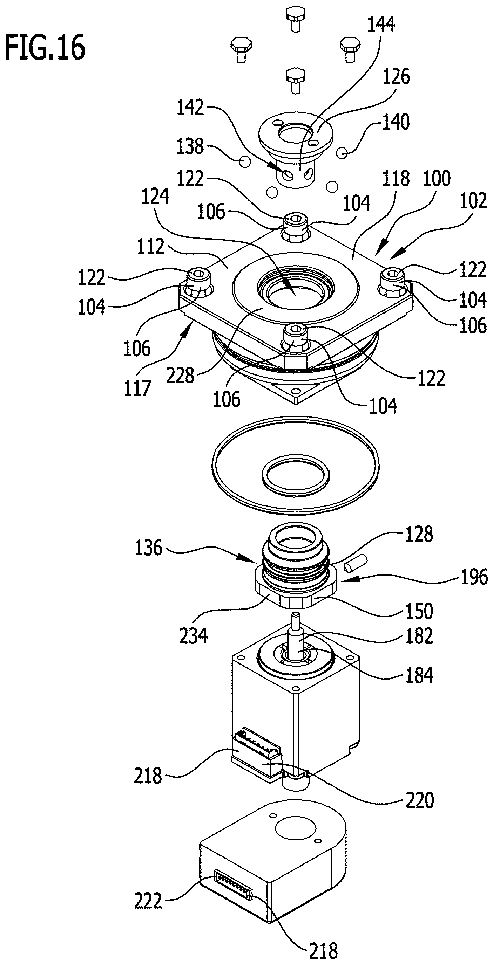

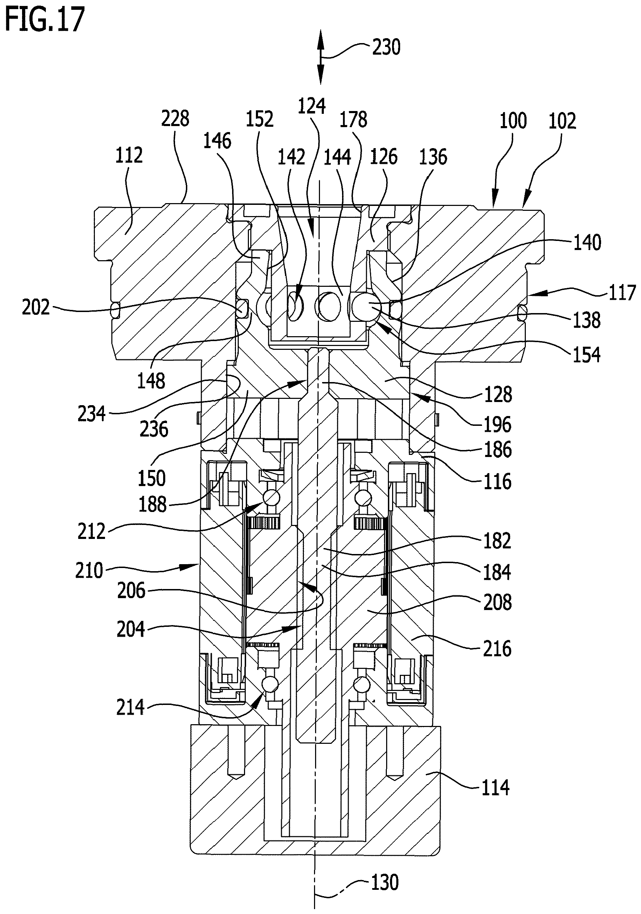

Eine in den Fig. 14 bis 17 dargestellte dritte Ausführungsform einer Spannvorrichtung 100 unterscheidet sich von der in den Fig. 1 bis 11 dargestellten ersten Ausführungsform durch die Gestaltung der Verdrehsicherung 196, welche verhindert, dass der Kolben 128 sich relativ zu dem oberen Gehäuseteil 112 der Spannvorrichtung 100 um die Längsmittelachse 130 der Spannvorrichtung 100 dreht.

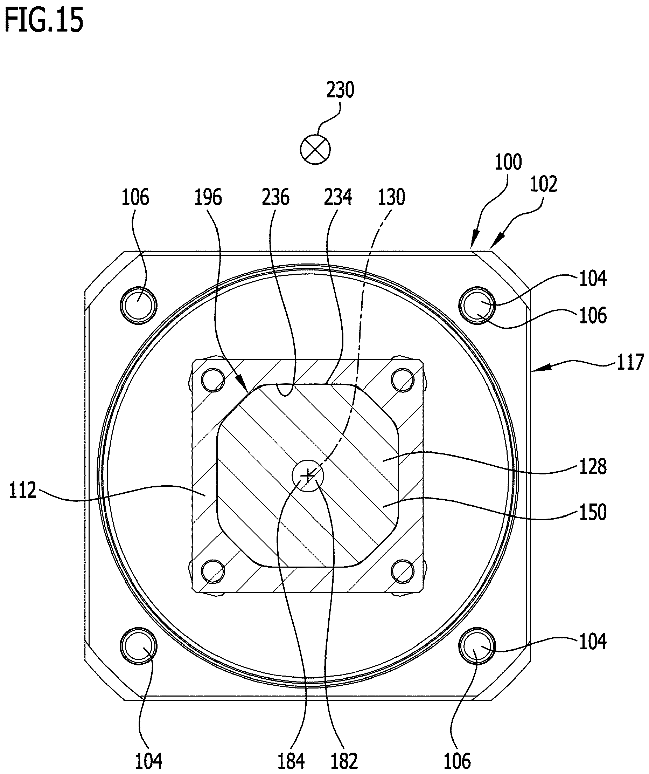

Wie am besten aus Fig. 15 zu ersehen ist, umfasst die Verdrehsicherung 196 des Kolbens 128 bei dieser Ausführungsform eine nicht rotationssymmetrische Führungskontur 234 an dem Kolben 128, welche mit einer komplementär hierzu ausgebildeten nicht rotationssymmetrischen Führungskontur 236 an der der Längsmittelachse 130 der Spannvorrichtung 100 zugewandten Innenseite des oberen Gehäuseteils 112 so zusammenwirkt, dass eine Verdrehung des Kolbens 128 relativ zu dem oberen Gehäuseteil 112 um die Längsmittelachse 130 der Spannvorrichtung 100 verhindert wird.

Die Führungskontur 234 am Kolben 128 ist vorzugsweise polygonal ausgebildet; im zeichnerisch dargestellten Ausführungsbeispiel ist sie achteckig ausgebildet, wobei die Ecken vorzugsweise gerundet sind.

Entsprechend hierzu ist bei dem zeichnerisch dargestellten Ausführungsbeispiel die Führungskontur 236 am oberen Gehäuseteil 112 ebenfalls polygonal ausgebildet, beispielsweise achteckig.

Auch die Ecken der Führungskontur 236 am oberen Gehäuseteil 112 sind vorzugsweise gerundet.

Im Übrigen stimmt die in den Fig. 14 bis 17 dargestellte dritte Ausführungsform einer Spannvorrichtung 100 hinsichtlich Aufbau, Funktion und Herstellungsweise mit der in den Fig. 1 bis 11 dargestellten ersten Ausführungsform überein, auf deren vorstehende Beschreibung insoweit Bezug genommen wird.

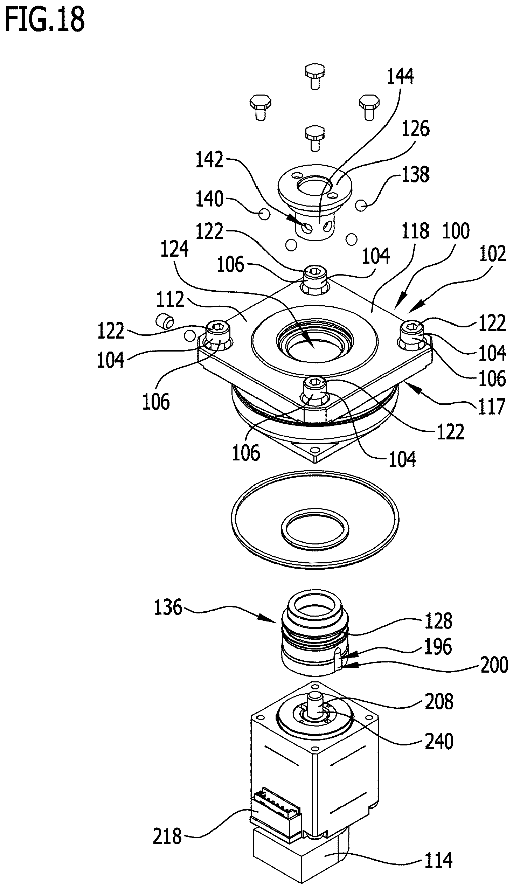

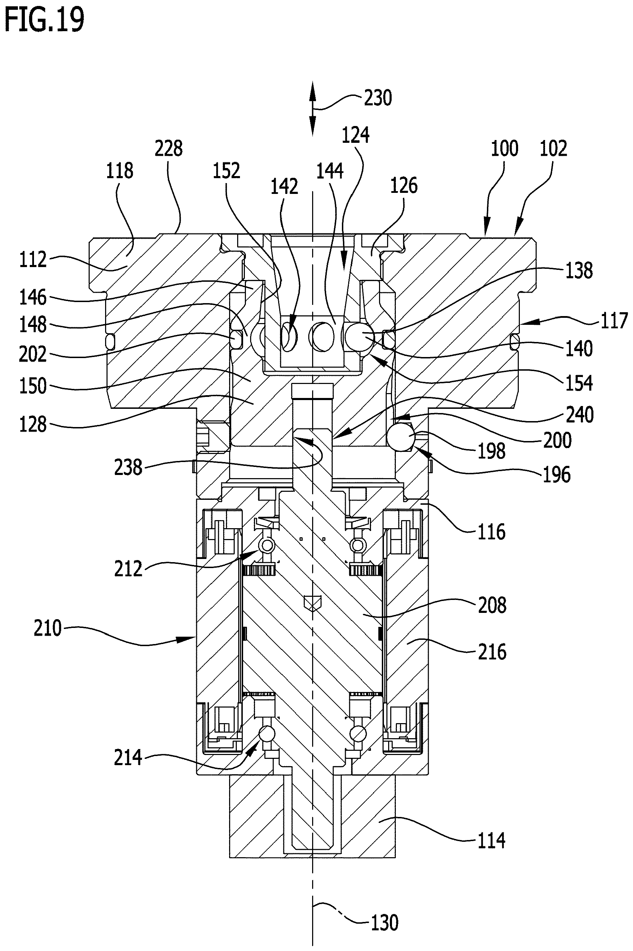

Eine in den Fig. 18 und 19 dargestellte vierte Ausführungsform einer Spannvorrichtung 100 unterscheidet sich von der in den Fig. 1 bis 11 dargestellten ersten Ausführungsform dadurch, dass die Rotationsbewegung des Rotors 208 des elektromotorischen Antriebs 210 nicht mittels eines Gewindeelements 182 in eine Linearbewegung des Kolbens 128 gewandelt wird, sondern der Kolben 128 selbst ein Gewinde 238 aufweist, welches mit einem hierzu komplementären Gewinde 240 des Rotors 208 des elektromotorischen Antriebs 210 in Eingriff steht (siehe insbesondere Fig. 19).

Da der Kolben 128 durch die Verdrehsicherung 196 an einer Rotation um die Längsmittelachse 130 der Spannvorrichtung 100 gehindert ist und der Rotor 208 des elektromotorischen Antriebs 210 an dem Antriebsgehäuseteil 116 so gelagert ist, dass seine axiale Position bezüglich der Längsmittelachse 130 nicht veränderbar ist, wird eine Drehbewegung des Rotors 208 in der Spannrichtung in eine lineare Bewegung des Kolbens 128 nach unten und eine Drehbewegung des Rotors 208 in der Freigaberichtung in eine lineare Bewegung des Kolbens 128 nach oben gewandelt.

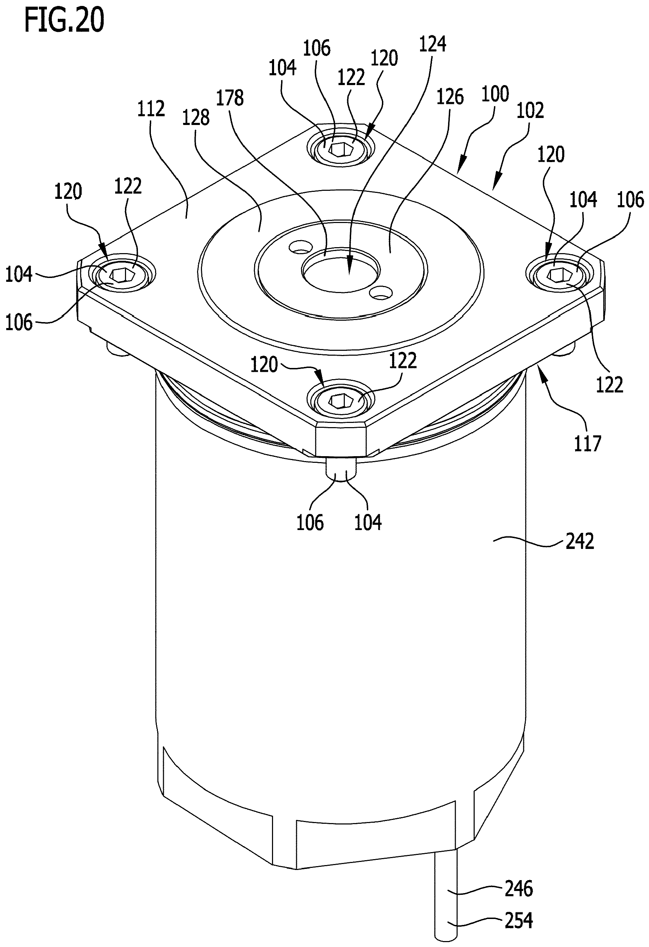

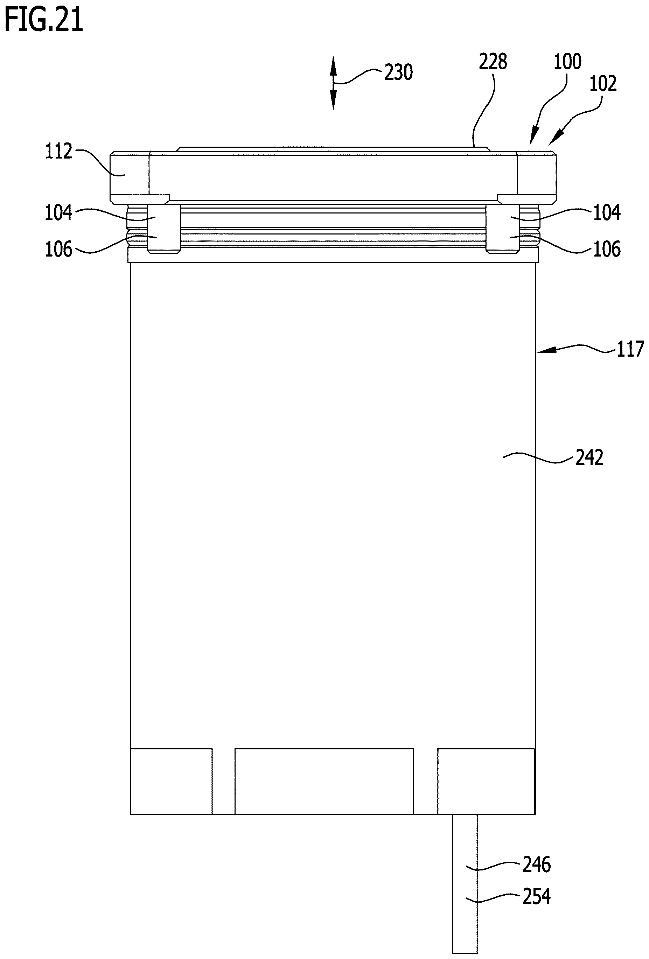

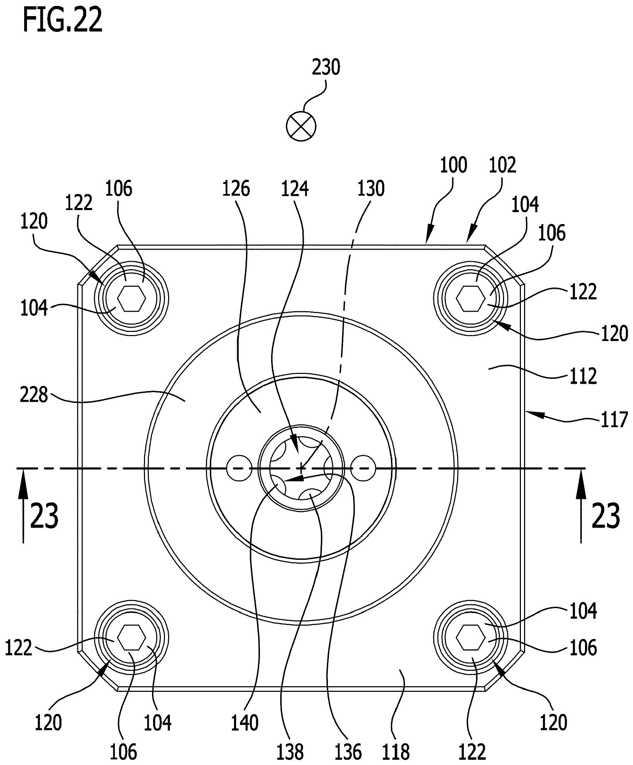

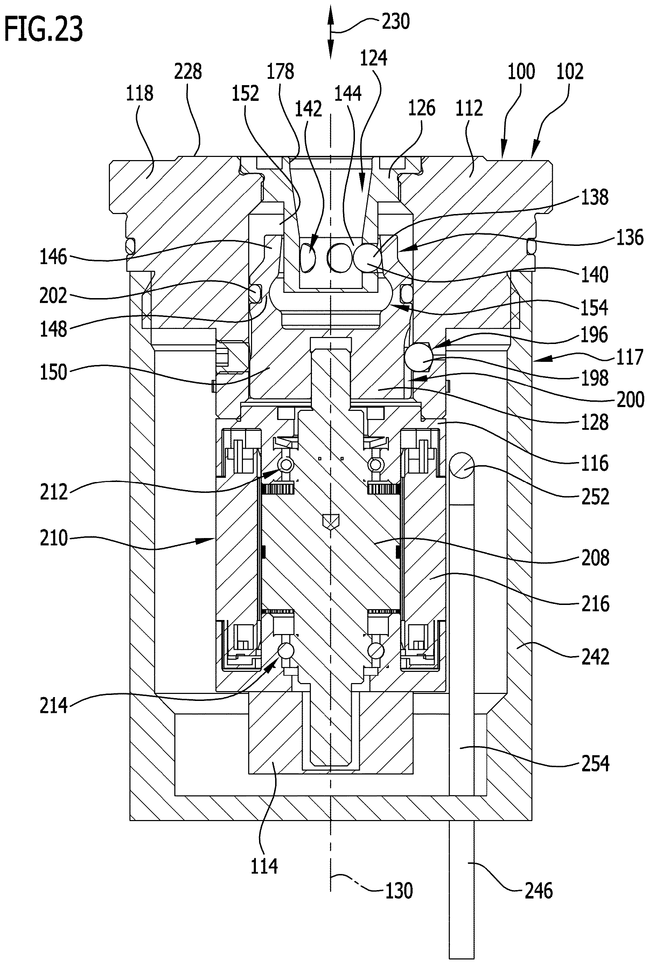

Im Übrigen stimmt die in den Fig. 18 und 19 dargestellte vierte Ausführungsform einer Spannvorrichtung hinsichtlich Aufbau, Funktion und Herstellungsweise mit der in den Fig. 1 bis 11 dargestellten ersten Ausführungsform überein, auf deren vorstehende Beschreibung insoweit Bezug genommen wird. Eine in den Fig. 20 bis 24 dargestellte fünfte Ausführungsform einer Spannvorrichtung 100 unterscheidet sich von der in den Fig. 18 und 19 dargestellten vierten Ausführungsform dadurch, dass das Gehäuse 117 der Spannvorrichtung 100 ein zusätzliches äußeres Gehäuseteil 242 umfasst, welches den elektromotorischen Antrieb 210 der Spannvorrichtung 100 seitlich umgibt.

Das äußere Gehäuseteil 242 kann beispielsweise im Wesentlichen hohlzylindrisch ausgebildet sein.

Bei dieser Ausführungsform ist vorzugsweise vorgesehen, dass die Spannvorrichtung 100 nur einen einzigen elektrischen Anschluss 218 aufweist.

In diesem Fall dient der einzige elektrische Anschluss 218 sowohl zum Zuführen der für den Betrieb des elektromotorischen Antriebs 210 benötigten elektrischen Energie als auch für die Übertragung von Steuersignalen von der Steuervorrichtung der Spannvorrichtung 100 und/oder zu der Steuervorrichtung der Spannvorrichtung 100.

Der einzige elektrische Anschluss 218 ist bei dieser Ausführungsform vorzugsweise an dem Antriebsgehäuseteil 116 angeordnet, wobei die Anschlusspins 226 des elektrischen Anschlusses 218 vorzugsweise im Wesentlichen parallel zu der Längsmittelachse 130 der Spannvorrichtung 100 und somit im Wesentlichen parallel zu der Verschiebungsrichtung 230 des Kolbens 128 zu der Oberseite 228 der Spannvorrichtung 100 weisen, an welcher die Spannbolzenaufnahme 126 der Spannvorrichtung 100 mündet.

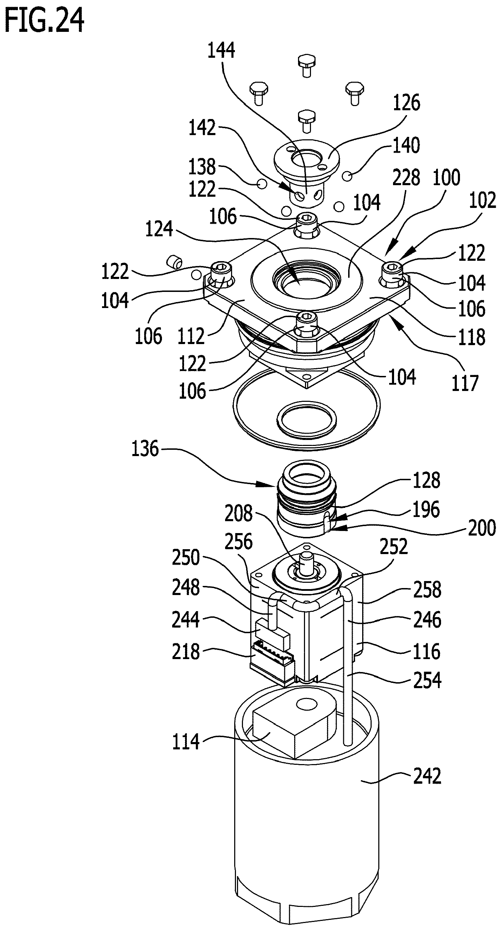

Wie am besten aus Fig. 24 zu ersehen ist, wirkt der elektrische Anschluss 218 mit einem Anschlussstecker 244 eines elektrischen Anschlusskabels 246 der Spannvorrichtung 100 zusammen.

Das elektrische Anschlusskabel 246 umfasst vorzugsweise einen ersten axialen Abschnitt 248, welcher an dem Anschlussstecker 244 endet und sich von dort im Wesentlichen parallel zu der Längsmittelachse 130 der Spannvorrichtung 100 nach oben erstreckt, einen ersten transversalen Abschnitt 250, welcher sich vorzugsweise in einer senkrecht zur Längsmittelachse 130 der Spannvorrichtung 100 ausgerichteten Ebene und im Wesentlichen parallel zu einer ersten Seitenfläche 256 des Antriebsgehäuseteils 116 erstreckt, einen zweiten transversalen Abschnitt 252, welcher sich vorzugsweise ebenfalls in einer senkrecht zur Längsmittelachse 130 der Spannvorrichtung 100 ausgerichteten Ebene und parallel zu einer zweiten Seitenfläche 258 des Antriebsgehäuseteils 116 und vorzugsweise im Wesentlichen senkrecht zu dem ersten transversalen Abschnitt 250 des elektrischen Anschlusskabels 246 erstreckt, und einen zweiten axialen Abschnitt 254, welcher sich im Wesentlichen parallel zu der Längsmittelachse 130 der Spannvorrichtung 100 nach unten, das heißt von der Spannbolzenaufnahme 126 weg, erstreckt.

Dabei ist der zweite axiale Abschnitt 254 des elektrischen Anschlusskabels 246 vorzugsweise in einer von der Oberseite 228 der Spannvorrichtung 100, an welcher die Spannbolzenaufnahme 126 mündet, weg weisenden Richtung aus dem äußeren Gehäuseteil 242 heraus geführt (siehe insbesondere die Fig. 20, 21 und 23).

Das elektrische Anschlusskabel 246 ist bei dieser Ausführungsform einer Spannvorrichtung 100 somit durch die Grundfläche des Gehäuses der Spannvorrichtung 100 aus dem Gehäuse herausgeführt.

Im Übrigen stimmt die in den Fig. 20 bis 24 dargestellte fünfte Ausführungsform einer Spannvorrichtung 100 hinsichtlich Aufbau, Funktion und Herstellungsweise mit der in den Fig. 18 und 19 dargestellten vierten Ausführungsform überein, auf deren vorstehende Beschreibung insoweit Bezug genommen wird.

## Patentansprüche

1. Spannvorrichtung zum Einspannen eines an einem Werkstück oder an einem Werkstückträger (132) angeordneten Spannbolzens (134), wobei die Spannvorrichtung (100) Verriegelungselemente (138) und einen Kolben (128) zum Bewegen der Verriegelungselemente (138) aus einer Freigabestellung in eine Verriegelungsstellung umfasst,
**dadurch gekennzeichnet,**
**dass** die Spannvorrichtung (100) einen elektromotorischen Antrieb (210) zum Bewegen des Kolbens (128) von einer Freigabestellung in eine Spannstellung und/oder von einer Spannstellung in eine Freigabestellung umfasst.

2. Spannvorrichtung nach Anspruch 1, **dadurch gekennzeichnet, dass** die Spannvorrichtung (100) ein Gehäuse (117) umfasst, in welchem der Kolben (128) linear bewegbar geführt ist.

3. Spannvorrichtung nach Anspruch 2, **dadurch gekennzeichnet, dass** die Spannvorrichtung (100) eine Spannbolzenaufnahme (126) umfasst, welche an einem Gehäusedeckel (118) des Gehäuses (117) festgelegt ist.

4. Spannvorrichtung nach Anspruch 3, **dadurch gekennzeichnet, dass** der Spannbolzen (134) so in der Spannbolzenaufnahme (126) zentrierbar ist, dass eine Längsmittelachse (162) des Spannbolzens (134) im Wesentlichen mit einer Längsmittelachse (130) der Spannvorrichtung (100) zusammenfällt, wobei ein Rotor (208) des elektromotorischen Antriebs (210) um die Längsmittelachse (130) der Spannvorrichtung (100) drehbar gelagert ist.

5. Spannvorrichtung nach einem der Ansprüche 1 bis 4, **dadurch gekennzeichnet, dass** die Spannvorrichtung (100) eine Verdrehsicherung (196) umfasst, durch welche der Kolben (128) an einer Drehbewegung um eine Längsmittelachse (130) der Spannvorrichtung (100) gehindert ist.

6. Spannvorrichtung nach Anspruch 5, **dadurch gekennzeichnet, dass** die Verdrehsicherung (196) eine Kolbenführungskugel (198) umfasst.

7. Spannvorrichtung nach einem der Ansprüche 5 oder 6, **dadurch gekennzeichnet, dass** die Verdrehsicherung (196) eine nicht rotationssymmetrische Führungskontur (234) an dem Kolben (128) umfasst.

8. Spannvorrichtung nach einem der Ansprüche 1 bis 7, **dadurch gekennzeichnet, dass** die Spannvorrichtung (100) ein Gewindeelement (182) umfasst, wobei das Gewindeelement (182) ein Gewinde (204) umfasst, das mit einem Gewinde (206) eines Rotors (208) des elektromotorischen Antriebs (210) in Eingriff steht,
wobei vorzugsweise das Gewindeelement (182) drehfest mit dem Kolben (128) verbunden ist.

9. Spannvorrichtung nach Anspruch 8, **dadurch gekennzeichnet, dass** der Kolben (128) mittels eines Gewindestifts (190) drehfest an dem Gewindeelement (182) gesichert ist.

10. Spannvorrichtung nach einem der Ansprüche 8 oder 9, **dadurch gekennzeichnet, dass** das Gewindeelement (182) einstückig mit dem Kolben (128) ausgebildet ist.

11. Spannvorrichtung nach einem der Ansprüche 1 bis 7, **dadurch gekennzeichnet, dass** der Kolben (128) ein Gewinde (238) aufweist, das mit einem Gewinde (240) eines Rotors (208) des elektromotorischen Antriebs (210) in Eingriff steht.

12. Spannvorrichtung nach einem der Ansprüche 1 bis 11, **dadurch gekennzeichnet, dass** die Spannvorrichtung (100) ein Gehäuseteil (114) umfasst, welches an einer parallel zu einer Verschiebungsrichtung (230) des Kolbens (128) ausgerichteten Seitenfläche (224) mit einem elektrischen Anschluss (218) versehen ist.

13. Spannvorrichtung nach einem der Ansprüche 1 bis 12, **dadurch gekennzeichnet, dass** die Spannvorrichtung (100) ein Gehäuseteil (116) umfasst, welches mit einem elektrischen Anschluss (218) versehen ist, dessen Anschlusspins (226) parallel zu einer Verschiebungsrichtung (230) des Kolbens (128) zu einer Oberseite (228) der Spannvorrichtung (100) weisen, an welcher ein Innenraum einer Spannbolzenaufnahme (126) der Spannvorrichtung (100) mündet.

14. Spannvorrichtung nach einem der Ansprüche 1 bis 13, **dadurch gekennzeichnet, dass** die Spannvorrichtung (100) ein Gehäuseteil (242) umfasst, aus welchem ein elektrisches Anschlusskabel (246) der Spannvorrichtung (100) in einer von einer Oberseite (228) der Spannvorrichtung (100), an welcher ein Innenraum einer Spannbolzenaufnahme (126) der Spannvorrichtung (100) mündet, weg weisenden Richtung herausgeführt ist.

15. Spannvorrichtung nach einem der Ansprüche 1 bis 14, **dadurch gekennzeichnet, dass** die Spannvorrichtung (100) mindestens zwei elektrische Anschlüsse (218) aufweist, wobei mindestens ein Signalanschluss (222) zum Anschließen einer Encoder-Signalleitung und mindestens ein Leistungsanschluss (220) zum Anschließen einer elektrischen Leistungsleitung ausgebildet ist.
